# NEUE EUROPÄISCHE PATENTSCHRIFT

(11) **EP 1 039 982 B2**
(45) Veröffentlichungstag und Bekanntmachung des Hinweises auf die Entscheidung über den Einspruch: **02.02.2011**
(45) Hinweis auf die Patenterteilung: 13.08.2003
(21) Anmeldenummer: 98958723.3
(22) Anmeldetag: 10.12.1998
(51) Int. Cl.: B23K 9/29

(54) **SCHWEISSBRENNER**
WELDING TORCH
CHALUMEAU DE SOUDAGE

(30) Priorität: 15.12.1997 AT 211497
(43) Veröffentlichungstag der Anmeldung: 04.10.2000
(73) Patentinhaber: Fronius International GmbH, 4643 Pettenbach (AT)
(72) Erfinder: WIMROITHER, Walter, 4562 Steinbach/Ziehberg (AT)
(74) Vertreter: Secklehner, Günter
(86) Internationale Anmeldenummer: PCT/AT1998/000301
(87) Internationale Veröffentlichungsnummer: WO 1999/030863

(56) Entgegenhaltungen:
- EP-A- 0 109 479
- CH-A- 437 573
- DE-A- 4 304 318
- DE-U- 8 906 897
- US-A- 5 248 868

## Beschreibung

Die Erfindung betrifft einen Schweißbrenner, wie er im Oberbegriff des Anspruches 1 und 2 beschrieben ist.

Es sind bereits Schweißbrenner bekannt, bei denen die Zuführung des Schweißdrahtes zum Kontaktrohr über eine Führungsvorrichtung erfolgt. Die Schweißbrenner bestehen dabei aus einem Grundkörper, in dem eine Zuführungsvorrichtung für einen Schweißdraht angeordnet ist. Die Zuführungsvorrichtung ist mit einem Verbindungsstück zur Aufnahme des Kontaktrohres verbunden. Damit eine bessere Führung des Schweißdrahtes gegeben ist, ist in der Zuführungsvorrichtung, welche beispielsweise aus einem Kupferrohr besteht, eine Führungsvorrichtung angeordnet. Hierzu ist die Führungsvorrichtung derartig ausgebildet, dass diese einen Außendurchmesser aufweist, der kleiner als der Innendurchmesser der Zuführungsvorrichtung ist. Weiters weist die Führungsvorrichtung einen Innendurchmesser auf, der in etwa dem Außendurchmesser des Schweißdrahtes entspricht, sodass eine exakte Führung des Schweißdrahtes in der Führungsvorrichtung gegeben ist. Die Führungsvorrichtung erstreckt sich vorn Schlauchpaket, welches mit dem Schweißbrenner verbunden ist, bis zum Kontaktrohr. Nachteilig ist bei einem derartigen Schweißbrenner, dass aufgrund der flexiblen Zuführung des Schweißdrahtes über ein flexibles Schlauchpaket der Schweißdraht eine entsprechende Dressur, also eine entsprechende Biegung, aufweisen kann, wodurch ein automatisches Einführen des Schweißdrahtes in das Kontaktrohr nicht möglich ist.

Aus der DE 89 068 97 U ist ein Schutzgasschweißbrenner mit einer Drahtführungs-Stromdüse gezeigt, welche von einer Schutzgasdüse umschlossen ist. Die Führungsvorrichtung für einen Draht ist in Art eines Kabels ausgebildet, welches sich in eine Führungsbohrung einer Buchse hineinerstreckt. Weiters ist eine Stromdüse angeordnet, welche durch Einschrauben in einen metallischen Teil im Schutzgasschweißbrenner befestigt wird und an welcher der Draht aus dem Scheißbrenner austritt. Zwischen der Buchse und dem metallischen Teil, die beabstandet zueinander angeordnet sind, sind radial zum Draht verlaufende Verteilerkanäle angeordnet, über welche ein Schutzgas in die Schweißzone strömen kann. Nachteilig bei diesem Aufbau ist es, dass der Schweißdraht im Übergangsbereich zwischen dessen Führungsvorrichtung, also dem Kabel, und der Stromdüse nicht umlaufend und eng umschlossen geführt wird und somit, beispielsweise beim Einfädeln eines neuen Schweißdrahtes in den Schweißbrenner, durch die mangelhafte Führung des Schweißdrahtes in diesem Übergangsbereich, an einer der Querschnittsverjüngungen bzw. Kanten aufgrund der Dressur des Schweißdrahtes zu einer ungewollten Auslenkung und Verbiegung des Schweißdrahtes kommen kann, wodurch die Durchführung des Drahtes durch die Stromdüse nicht mehr möglich ist.

Ähnliche Aufbauten weisen die Schweißbrenner gemäß den Dokumenten CH 43 75 73 A und DE 43 043 18 A auf, da die Vorrichtungen zur Führung des Schweißdrahtes wiederum vor dem Kontaktrohr bzw. der Stromdüse enden, und im Übergangsbereich zwischen Kontaktrohr und der Führungsvorrichtung die zuvor beschriebenen Nachteile entstehen können, wodurch ein zuverlässiges, automatisches Durchführen des Schweißdrahtes nicht ermöglicht wird.

Die US 5,248,868 A zeigt einen Schweißbrenner, der eine Führungsvorrichtung für einen Schweißdraht und ein Kontaktrohr aufweist, aus welchen am von der Führungsvorrichtung abgewandten stirnseitigen Endbereich der Schweißdraht austritt. Nachteilig ist hierbei, dass zwischen der Führungsvorrichtung und dem Kontaktrohr ein Abstand vorhanden ist, wodurch bei einer Dressur des Schweißdrahtes ein automatisches Einführen desselben ins Kontaktrohr wiederum nicht möglich ist.

Der vorliegenden Erfindung liegt die Aufgabe zugrunde, einen Schweißbrenner zu schaffen, mit dem die Führung und Kontaktierung des Schweißdrahtes verbessert werden kann.

Diese Aufgabe der Erfindung wird durch die Merkmale des Anspruches 1 beschrieben. Vorteilhaft ist hierbei, dass durch das Einführen der Führungsvorrichtung in eine entsprechende Bohrung des Kontaktrohres eine exakte Positionierung des Schweißdrahtes beim Austritt aus der Führungsvorrichtung gegeben ist. Ein weiterer Vorteil liegt darin, dass aufgrund der exakten Führung der Führungsvorrichtung über eine Länge in der Bohrung des Kontaktrohres eine Ausrichtung des Schweißdrahtes, insbesondere der Dressur des Schweißdrahtes, geschaffen wird, sodass der Schweißdraht mit einer geringen Dressur in die Bohrung des Kontaktrohres eintritt, wodurch ein Abrieb des Schweißdrahtes in der Bohrung des Kontaktrohres zumindest verringert wird.

Weiters umfaßt die Erfindung einen Schweißbrenner, wie er im Oberbegriff des Anspruches 2 beschrieben ist.

Dieser Schweißbrenner ist durch die Merkmale im Kennzeichenteil des Anspruches 2 gekennzeichnet. Vorteilhaft ist hierbei, daß durch Anordnung eines Übergangsstückes zwischen der Führungsvorrichtung und dem Kontaktrohr auf die Dressur des Schweißdrahtes durch die entsprechende Ausbildung des Führungsteils des Übergangsstückes in einfacher Form Einfluß genommen werden kann. Ein weiterer Vorteil liegt darin, daß durch einfachen Austausch des Übergangsstückes unterschiedliche Schweißdrähte mit unterschiedlichen Außendurchmessern verwendet werden können, ohne daß dabei der Benutzer irgendwelche speziellen Kenntnisse über den Schweißbrenner aufweisen muß.

Von Vorteil ist aber auch eine Ausbildung nach den Ansprüchen 3 und 4, da dadurch eine exakte Positionierung des Schweißdrahtes gegenüber dem Kontaktrohr geschaffen wird.

Es ist auch eine Ausbildung nach Anspruch 5 von Vorteil, da dadurch erreicht wird, daß beim Austritt des Schweißdrahtes aus der Führungsvorrichtung durch die konische Verjüngung eine Ablenkung des Schweißdrahtes in Richtung der Bohrung des Kontaktrohres geschaffen wird, sodaß eine automatische Zuführung des Schweißdrahtes möglich ist.

Vorteilhaft sind auch die Ausbildungen nach den Ansprüchen 6 bis 8, da dadurch eine kostengünstige Herstellung des Übergangsstückes möglich ist, da nur für die wesentlichen Teile zur Führung des Schweißdrahtes ein entsprechend hochwertiges Material, welches bevorzugt eine hohe Reibfestigkeit aufweist, eingesetzt werden kann.

Es ist auch eine Ausbildung nach Anspruch 9 von Vorteil, da dadurch in einfacher Form eine exakte Positionierung des Schweißdrahtes für das Kontaktrohr geschaffen wird.

Vorteilhaft ist auch eine Ausbildung nach den Ansprüchen 10 und 11, da dadurch ein geringer Widerstand bei der Drahtführung des Schweißdrahtes erreicht wird.

Von Vorteil ist auch eine Ausbildung nach Anspruch 12, da dadurch eine einfache Anpassung des Führungsteils des Übergangsstückes an die unterschiedlichen Schweißdrähte möglich ist.

Von Vorteil ist auch eine Ausbildung nach Anspruch 13, da dadurch ein Verschieben des Übergangsstückes verhindert wird.

Es ist aber auch eine Ausbildung nach Anspruch 14 von Vorteil, da dadurch verhindert wird, daß die Führungsvorrichtung beim Austritt aus der Zuführungsvorrichtung einen zu geringen Radius aufweist, sodaß ein automatisches Zuführen des Schweißdrahtes zum Kontaktrohr nicht möglich wäre.

Von Vorteil ist auch eine Ausbildung nach Anspruch 15, da dadurch verhindert wird, daß sich die Führungsvorrichtung vom Übergangsstück durch Zug- bzw. Schubbewegungen des Schweißdrahtes lösen kann.

Es ist auch eine Ausbildung nach Anspruch 16 von Vorteil, da durch die flexible Ausbildung der Führungsvorrichtung sich diese an die Dressur des Schweißdrahtes anpassen kann, sodaß eine einfache Zuführung des Schweißdrahtes zum Kontaktrohr erreicht wird.

Von Vorteil ist auch eine Ausbildung nach Anspruch 17, da dadurch die Führung des Schweißdrahtes bis zum Kontaktrohr stromlos erfolgen kann, sodaß im Inneren des Schweißbrenners bzw. der Zuführungsvorrichtung oder im Schlauchpaket eine Funkenbildung bzw. ein Entstehen eines Lichtbogens verhindert wird.

Es ist auch eine Ausbildung nach den Ansprüchen 18 und 19 von Vorteil, da dadurch wiederum erreicht wird, daß der Widerstand bei der Drahtführung durch die Führungsvorrichtung möglichst gering gehalten wird.

Von Vorteil ist auch eine Ausbildung nach Anspruch 20, da dadurch eine sichere Kontaktierung des Schweißdrahtes mit dem Kontaktrohr erreicht wird, sodaß ein Stromübergang im Kontaktrohr geschaffen werden kann.

Vorteilhaft ist auch eine Ausbildung nach Anspruch 21, da bei der Verwendung des Schweißbrenners für einen Schweißroboter eine entsprechende Positionierung an schwer zugänglichen Schweißstellen möglich ist.

Es ist auch eine Ausbildung nach Anspruch 22 von Vorteil, da dadurch die Schweißdauer für einen Schweißprozeß wesentlich erhöht werden kann.

Es ist auch eine Ausbildung nach Anspruch 23 von Vorteil, da dadurch innerhalb des Schweißbrenners bzw. im Kontaktrohr eine Schutzgasatmosphäre geschaffen wird, sodaß eine Korrosion des Schweißbrenners bzw. der einzelnen Komponenten verhindert wird.

Die Erfindung wird im Nachfolgenden anhand der in den Zeichnungen dargestellten Ausführungsbeispiele näher erläutert.

Es zeigen:
- Fig. 1: ein Schaubild des erfindungsgemäßen Schweißbrenners in Seitenansicht geschnitten und vereinfachter, schematischer Darstellung;
- Fig. 2: eine weitere Ausführungsform des erfindungsgemäßen Schweißbrenners in Seitenansicht geschnitten und vereinfachter, schematischer Darstellung;
- Fig. 3: eine Detaildarstellung des Übergangsstückes in Seitenansicht geschnitten und vereinfachter Darstellung;
- Fig. 4: ein weiteres Ausführungsbeispiel für die Anwendung des Übergangsstückes im erfindungsgemäßen Schweißbrenner in vereinfachter, schematischer Darstellung;
- Fig. 5: ein anderes Ausführungsbeispiel des Übergangsstückes für den erfindungsgemäßen Schweißbrenner in vereinfachter, schematischer Darstellung;
- Fig. 6: ein weiteres Ausführungsbeispiel des Übergangsstückes in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw, gleichen Bauteilbezeichnungen übertragen werden können. Auch sind die in der Beschreibung gewählten Lageangaben, wie z.B. oben, unten, seitlich usw., auf die unmittelbar beschriebene sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige, erfindungsgemäße Lösungen darstellen.

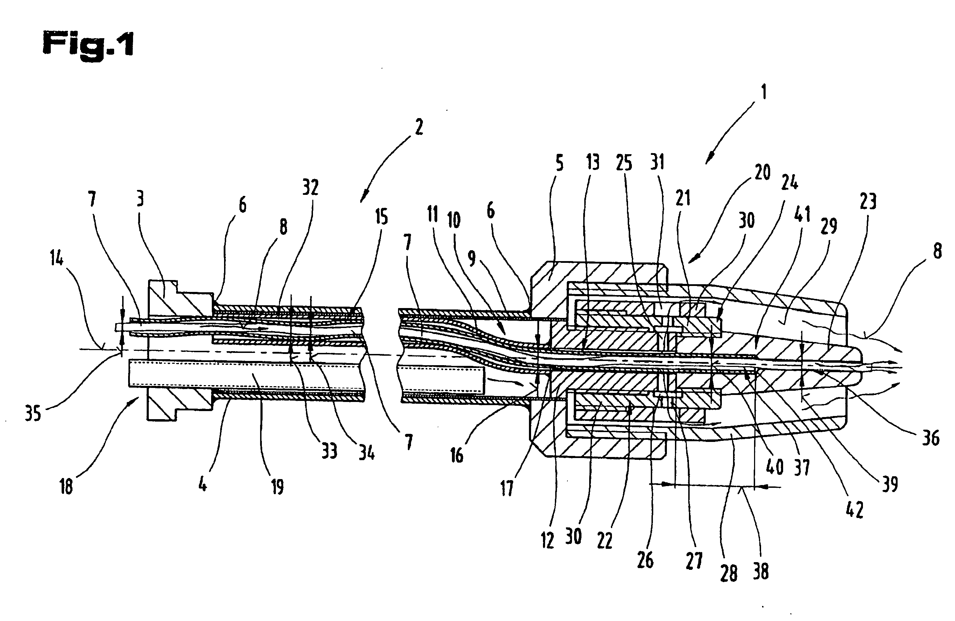

In Fig. 1 ist ein Schweißbrenner 1 beispielsweise zum MIG/MAG-Schweißen gezeigt, wobei der Schweißbrenner 1 bei dem dargestellten Ausführungsbeispiel für einen Schweißroboter ausgebildet ist.

Der Schweißbrenner 1 besteht aus einem Grundkörper 2, der aus einem einzigen Teil, bevorzugt jedoch aus mehreren Teilen, gebildet werden kann. Bei dem dargestellten Ausführungsbeispiel besteht der Grundkörper 2 aus einem Anschlußstück 3, einem Mittelstück 4 und aus einem Endstück 5. Die einzelnen Teile des Grundkörpers 2 bestehen beispielsweise aus Messing und sind untereinander verlötet oder über einzelne Schweißraupen 6 miteinander verbunden. Selbstverständlich ist es möglich, daß jedes beliebige Material für den Grundkörper 2 eingesetzt werden kann. Es ist auch möglich, daß der Grundkörper 2 an seiner Außenfläche eine Isolierschicht in Form von Kunststoff aufweisen kann.

Über das Anschlußstück 3 kann der Schweißbrenner 1 mit einem Schlauchpaket an ein Schweißgerät bzw. an eine Stromquelle angeschlossen werden. Durch das Schlauchpaket werden die einzelnen für den Schweißbrenner 1 benötigten Zusatzmaterialien, wie beispielsweise ein Schweißdraht 7, ein Schutzgas 8 sowie die Kühlflüssigkeit zum Kühlen des Schweißbrenners 1, zugeführt. Weiters wird der Schweißbrenner 1 über das Schlauchpaket mit Energie, insbesondere mit Strom und Spannung, von dem Schweißgerät bzw. von der Stromquelle versorgt.

Im Inneren des Grundkörpers 2 ist es möglich, daß eine Isolationsschicht 9, beispielsweise aus Kunststoff, angeordnet ist. Die Isolationsschicht 9 hat die Aufgabe, den im Inneren des Schweißbrenners 1 fließenden Strom gegenüber der Außenfläche, also gegenüber dem Grundkörper 2, zu isolieren, sodaß bei Berührung des Schweißbrenners 1 von einem Benutzer kein Stromschlag entstehen kann.

Weiters weist der Schweißbrenner 1 im Inneren des Grundkörpers 2 eine Zuführungsvorrichtung 10, welche aus einem Kupferrohr 11 und einem Übergangselement 12 gebildet ist, auf. Die Zuführungsvorrichtung 10 ist einerseits mit dem Anschlußstück 3 und andererseits mit dem Endstück 5 des Grundkörpers 2 verbunden. Das Kupferrohr 11 und das Übergangselement 12 der Zuführungsvorrichtung 10 können mit dem Anschlußstück 3 und/oder mit dem Endstück 5 verpreßt, verlötet oder verschweißt werden.

Das Übergangselement 12 weist eine im Mittel verlaufende Bohrung 13 auf. Die Bohrung 13 ist bei der dargestellten Ausführungsform des Schweißbrenners 1 in Längsrichtung einer im Mittel des Schweißbrenners 1 verlaufenden Längsmittelachse 14 angeordnet. An das Übergangselement 12 in Richtung des Anschlußstückes 3 ist das Kupferrohr 11 mit dem Übergangselement 12 verbunden, wobei das Kupferrohr 11 derart mit dem Übergangselement 12 verbunden ist, daß ein im Inneren des Kupferrohres 11 gebildeter Hohlraum 15 mit der Bohrung 13 des Übergangselementes 12 konzentrisch bzw. fluchtend verläuft, d.h., daß das Kupferrohr 11 einen Innendurchmesser 16 aufweist, der dem Durchmesser der Bohrung 13 des Übergangselementes 12 entspricht. Das Kupferrohr 11 kann beispielsweise mit dem Übergangselement 12 verlötet oder über eine Schweißraupe 17 mit dem Übergangselement 12 verbunden werden.

Bei dem dargestellten Ausführungsbeispiel ist das Kupferrohr 11 derart ausgebildet, daß es sich vom Mittelbereich, also in Längsrichtung der Längsmittelachse 14 des Schweißbrenners 1, winkelig in Richtung der Innenfläche des Grundkörpers 2 erstreckt, wobei anschließend das Kupferrohr 11 parallel zum Mittelstück 4, insbesondere parallel zur Isolierschicht 9, verläuft, d.h., daß das Kupferrohr 11 von der Mittellage, insbesondere von der in Längsrichtung der Längsmittelachse 14 verlaufenden Lage, in eine parallel zur Längsmittelachse 14 verlaufende Lage verformt bzw. abgelenkt wird.

Durch die Verformung bzw. Ablenkung von der Mittellage des Schweißbrenners 1 in eine parallel zur Längsmittelachse 14 verlaufende Position bzw. Lage wird erreicht, daß innerhalb des Grundkörpers 2 ein entsprechender Freiraum geschaffen wird, sodaß eine Kühlvorrichtung 18 im Inneren des Grundkörpers 2 angeordnet werden kann. Die Kühlvorrichtung 18 wird dabei aus Versorgungsrohren 19, von denen jedoch nur ein Versorgungsrohr 19 durch die gezeigte Schnittdarstellung dargestellt ist, gebildet. Durch die Anordnung der Kühlvorrichtung 18 im Inneren des Grundkörpers 2 wird erreicht, daß über das Versorgungsrohr 19 ein entsprechendes Kühlmittel in den Innenraum des Schweißbrenners 1 gepumpt bzw. befördert werden kann, welches anschließend über das weitere, nicht dargestellte Versorgungsrohr 19 wieder aus dem Schweißbrenner 1 austreten kann. Durch einen derartigen Kreislauf wird eine entsprechende Kühlung des Schweißbrenners 1 erzielt.

Selbstverständlich ist es möglich, daß die Zuführungsvorrichtung 10 in Längsrichtung des Schweißbrenners 1, also fluchtend zur Längsmittelachse 14, verlaufen kann, wobei parallel zur Längsmittelachse 14 die einzelnen Versorgungsrohre 19 angeordnet sein können.

In einem Endbereich 20 des Schweißbrenners 1, also im Bereich des Endstückes 5, ist in entgegengesetzter Richtung zum Anschlußstück 3 ein Verbindungsstück 21 angeordnet. Das Verbindungsstück 21 ist mit dem Übergangselement 12 der Zuführungsvorrichtung 10 verbunden. Hierzu ist es möglich, daß das Übergangselement 12 mit dem Verbindungsstück 21 über eine Gewindeanordnung 22 verbunden werden kann, wobei das Übergangselement 12 ein Außengewinde und das Verbindungsstück 21 ein Innengewinde aufweist, sodaß ein Aufschrauben des Verbindungsstückes 21 auf das Übergangselement 12 möglich ist. Das Verbindungsstück 21 hat die Aufgabe, ein für einen Schweißprozeß benötigtes Kontaktrohr 23 aufzunehmen. Hierzu weist das Verbindungsstück 21 wiederum eine Gewindeanordnung 24 auf, über die das Kontaktrohr 23 mit dem Verbindungsstück 21 verbunden bzw. befestigt werden kann. Durch die Verwendung der Gewindeanordnung 24 zum Befestigen des Kontaktrohres 23 wird erreicht, daß das Kontaktrohr 23 leicht von einem Benutzer ausgetauscht werden kann, ohne daß dazu ein Fachpersonal benötigt wird.

Bei dem dargestellten Schweißbrenner 1 erfolgt die Zufuhr des Schutzgases 8 für einen Schutzgasmantel im Bereich der Schweißstelle über die Zuführungsvorrichtung 10, d.h., daß vom Anschlußstück 3 über das Kupferrohr 11 das Schutzgas 8 in Richtung des Endbereiches 20 des Schweißbrenners 1 befördert wird, sodaß beim Austritt aus der Zuführungsvorrichtung 10 ein Schutzgasmantel an der Schweißstelle geschaffen werden kann. Hierzu weist nunmehr das Übergangselement 12 im Endbereich 20 des Schweißbrenners 1 radial um die Längsmittelachse 14 des Schweißbrenners 1 verlaufende Bohrungen 25 auf. Zusätzlich ist im Verbindungsstück 21 ein Hohlraum 26 angeordnet, sodaß das Schutzgas 8 von der Zuführungsvorrichtung 10, insbesondere vom Übergangselement 12, über die Bohrungen 25 in den Hohlraum 26 des Verbindungsstückes 21 strömen kann. Damit nunmehr das Schutzgas 8 vom Hohlraum 26 zur Schweißstelle gelangen kann, ist das Verbindungsstück 21 wiederum mit radial um die Längsmittelachse 14 verlaufenden Bohrungen 27 versehen. Die Bohrungen 27 sind im Bereich des Hohlraumes 26 am Verbindungsstück 21 angeordnet, sodaß das Schutzgas 8 vom Hohlraum 26 über die Bohrungen 27 nach außen zur Schweißstelle strömen kann.

Damit eine Konzentrierung des Schutzgases 8 um das Kontaktrohr 23 bzw. an der Schweißstelle erfolgen kann, weist der Schweißbrenner 1 eine Gasdüse 28 auf. Die Gasdüse 28 ist dabei mit dem Endstück 5 des Grundkörpers 2 verbunden, wobei wiederum zum Verbinden der Gasdüse 28 mit dem Endstück 5 ein Gewinde vorgesehen sein kann. Selbstverständlich ist es möglich, daß die Gasdüse 28 nur auf das Endstück 5 des Grundkörpers 2 aufgesteckt werden kann. Durch die Anordnung der Gasdüse 28 wird erreicht, daß sich das austretende Schutzgas 8 im Innenraum 29 der Gasdüse 28 sammelt und anschließend in Richtung des Kontaktrohres 23 strömt, wodurch eine Schutzgasatmosphäre um das Kontaktrohr 23 bzw. um die Schweißstelle gebildet wird. Hierzu ist es beispielsweise möglich, daß über das Verbindungsstück 21 eine Isolierkappe 30 angeordnet ist. Die Isolierkappe 30 weist wiederum im Bereich der Bohrungen 27 des Verbindungsstückes 21 radial verlaufende Bohrungen 31 auf. Durch diese Bohrungen 31 kann das Schutzgas 8 von der Zuführungsvorrichtung 10 über die einzelnen Bohrungen 25, 27, 31 in den Innenraum 29 der Gasdüse 28 strömen und eine entsprechende Schutzgasatmosphäre bilden.

Der Vorteil der Zuführung des Schutzgases 8 über die Zuführungsvorrichtung 10 liegt darin, daß zusätzlich zu dem über die Bohrungen 25, 27, 31 ausströmenden Schutzgas 8 das Schutzgas 8 durch das Kontaktrohr 23 in Richtung der Schweißstelle strömen kann, sodaß im Inneren des Kontaktrohres 23 wiederum eine Schutzgasatmosphäre entsteht und somit eine Korrosion des Kontaktrohres 23 verhindert wird.

Selbstverständlich ist es möglich, daß die Zuführung des Schutzgases 8 durch Extraleitungen erfolgen kann, sodaß anschließend wiederum eine Schutzgasatmosphäre im Bereich des Kontaktrohres 23 geschaffen werden kann.

Damit der Schweißdraht 7 in den Schweißbrenner 1 eingeführt werden kann, ist in der Zuführungsvorrichtung 10 eine Führungsvorrichtung 32 für den Schweißdraht 7 angeordnet. Die Führungsvorrichtung 32 ist beispielsweise aus einem elastischen Rohr oder einer Spiralfeder aus einem Kunststoff gebildet. Selbstverständlich ist es möglich, jedes beliebige Material, welches elastische Eigenschaften aufweist, einsetzen zu können. Es ist auch möglich, daß die Führungsvorrichtung 32 aus einem elektrisch nicht leitenden Material gebildet ist, wodurch erreicht wird, daß der Schweißdraht 7 bis zum Schweißbrenner 1 stromlos geführt werden kann. Weiters weist die Führungsvorrichtung 32 einen Außendurchmesser 33 auf, der kleiner bzw. geringer als der Innendurchmesser 16 der Zuführungsvorrichtung 10, insbesondere des Kupferrohres 11, ist. Hierzu ist es möglich, daß der Außendurchmesser 33 der Führungsvorrichtung 32 beispielsweise um 10 % bis 50 %, bevorzugt um 25 % kleiner ist als der Innendurchmesser 16 der Zuführungsvorrichtung 10.

Ein Innendurchmesser 34 der Führungsvorrichtung 32 ist zumindest geringfügig größer als ein Außendurchmesser 35 des Schweißdrahtes 7. Durch eine derartige Ausbildung ist es nunmehr möglich, daß die Führungsvorrichtung 32 in das Kupferrohr 11 bzw. in die Zuführungsvorrichtung 10 eingeschoben werden kann. Gleichzeitig kann ein leichter Transport des Schweißdrahtes 7 durch die entsprechende Auslegung des Innendurchmessers 34 erfolgen.

Der Vorteil durch die Anordnung der Führungsvorrichtung 32 liegt nun darin, daß bei einem derartigen Schweißbrenner 1 für unterschiedliche Schweißungen unterschiedliche Schweißdrähte 7 mit unterschiedlichem Außendurchmesser 35 verwendet werden, wodurch die nicht austauschbare Zuführungsvorrichtung 10, insbesondere der Innendurchmesser 16, entsprechend dimensioniert werden muß. Hierdurch ist es nunmehr möglich, daß der Benutzer des Schweißbrenners 1 durch einfachen Austausch der Führungsvorrichtung 32 eine Anpassung an die unterschiedlichsten Schweißdrähte 7 durchführen kann. Selbstverständlich ist es möglich, daß bei Verwendung einer entsprechenden Führungsvorrichtung 32 mit einem entsprechenden Innendurchmesser 34 mehrere Schweißdrähte 7 mit unterschiedlichen Außendurchmessern 35 eingesetzt werden können.

Würde nämlich keine Führungsvorrichtung 32 in die Zuführungsvorrichtung 10 eingesetzt, so kann es aufgrund des relativ großen Innendurchmessers 16 der Zuführungsvorrichtung 10 bei einem Einfädeln bzw. einem Einführen des Schweißdrahtes 7 in Richtung des Kontaktrohres 23 zu Fehlern kommen, da der Schweißdraht 7 aufgrund des großen Innendurchmessers 16 der Zuführungsvorrichtung 10 sich entsprechend verlaufen bzw. abgewinkelt werden kann, sodaß es zu Verkantungen des Schweißdrahtes 7 im Schweißbrenner 1 kommen kann und somit eine automatische Einfuhr des Schweißdrahtes 7 nicht möglich ist.

Die Führungsvorrichtung 32 wird derartig im Schweißbrenner 1 angeordnet, daß sich diese vom Anschlußstück 3 bzw. vom Schlauchpaket über die Zuführungsvorrichtung 10, insbesondere über das Kupferrohr 11 und das Übergangselement 12 in Richtung zum Kontaktrohr 23 erstreckt. Hierbei ist das Kontaktrohr 23 derartig ausgebildet, daß eine für den Schweißdraht 7 angeordnete Bohrung 36 und eine für die Führungsvorrichtung 32 aufweisende Führungsbohrung 37 angeordnet ist. Die Führungsbohrung 37 für die Führungsvorrichtung 32 erstreckt sich über eine Länge 38 vom Übergangselement 12 in Richtung der Bohrung 36, insbesondere von dem Übergangselement 12 zur Schweißstelle. Der Unterschied der Bohrungen 36 und der Führungsbohrung 37 des Kontaktrohres 23 liegt nun darin, daß die Bohrung 36 für den Schweißdraht 7 einen Durchmesser 39 aufweist, welcher geringfügig größer dem Außendurchmesser 35 des Schweißdrahtes 7 ist. Die weitere Führungsbohrung 37 des Kontaktrohres 23 für die Führungsvorrichtung 32 weist einen Durchmesser 40 auf, der geringfügig größer dem Außendurchmesser 33 der Führungsvorrichtung 32 ist. Hierdurch ist es nunmehr möglich, daß die Führungsvorrichtung 32 in die Führungsbohrung 37 des Kontaktrohres 23 eingeschoben werden kann bzw. eindringen kann, sodaß eine exakte Positionierung der Führungsvorrichtung 32 zum Kontaktrohr 23 über die Länge 38 gegeben ist.

Weiters weist die Führungsbohrung 37 in einem Übergangsbereich 41 zur Bohrung 36 eine konische Verjüngung 42 auf, sodaß beim Austritt des Schweißdrahtes 7 aus der Führungsvorrichtung 32 keine scharfen Kanten beim Übergang zur Bohrung 36 des Kontaktrohres 23 entstehen und somit eine automatische Einführung des Schweißdrahtes 7 möglich ist.

Durch die Positionierung der Führungsvorrichtung 32 bzw. durch das Einführen der Führungsvorrichtung 32 in das Kontaktrohr 23 wird nun erreicht, daß eine exakte Positionierung des Schweißdrahtes 7 über die Länge 38 zur Bohrung 36 des Kontaktrohres 23 erzielt wird, d.h., daß der Innendurchmesser 34 der Führungsvorrichtung 32 fluchtend zur Bohrung 36 des Kontaktrohres 23 gehalten bzw. positioniert ist, sodaß bei einer Einführung bzw. Förderung des Schweißdrahtes 7 ein exakter Übergang von der Führungsvorrichtung 32 zur Bohrung 36 des Kontaktrohres 23 geschaffen wird. Weiters wird durch eine derartige Anordnung der Führungsvorrichtung 32 erreicht, daß bei einer Ausbildung der Führungsvorrichtung 32 aus einem elastischen, elektrisch nicht leitenden Material, beispielsweise aus Kunststoff, der Stromübergang erst im Bereich des Kontaktrohres 23 erfolgt. Dies ist insofern von Vorteil, da bei einer Zündung bzw. bei aufgebautem Lichtbogen keine Verlustleistungen durch die kurze Energieförderung über den Schweißdraht 7 entstehen können.

Selbstverständlich ist es möglich, daß ein Stromübergang an den Schweißdraht 7 bereits im Schweißbrenner 1, also in der Zuführungsvorrichtung 10, erfolgen kann. Es ist auch möglich, daß der Schweißdraht 7 bereits im Schweißgerät bzw. in der Stromquelle mit Energie beaufschlagt wird, sodaß eine Stromführung vom Schweißgerät bis zum Schweißbrenner 1 über den Schweißdraht 7 erfolgt.

Ein weiterer Vorteil einer derartigen Ausbildung des Schweißbrenners 1 mit der Positionierung der Führungsvorrichtung 32 im Kontaktrohr 23, insbesondere durch das Einführen der Führungsvorrichtung 32 in die Führungsbohrung 37 des Kontaktrohres 23, liegt darin, daß bei Verwendung eines Aluminium-schweißdrahtes, durch die Zuführung über das Schlauchpaket der Schweißdraht 7 eine entsprechende Dressur aufweist, sodaß ein Einführen bzw. ein Schweißen ohne einer exakten Positionierung beim Austritt des Schweißdrahtes 7 aus der Führungsvorrichtung 32 und beim Eintritt in die Bohrung 36 des Kontaktrohres 23 nicht möglich ist, da es bei zu großen Durchmesserunterschieden der einzelnen Komponenten zu Verkantungen kommen kann.

Bei einem derartigen Ausführungsbeispiel, wie es in Fig. 1 beschrieben ist, sind die einzelnen Teile des Schweißbrenners 1 bevorzugt kreisrundförmig ausgebildet.

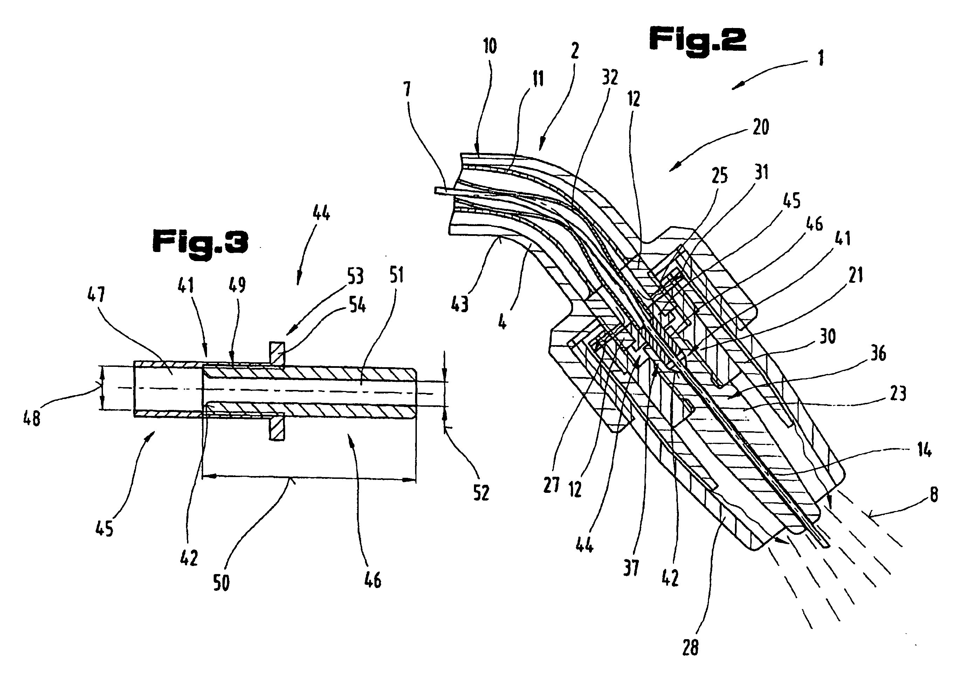

In Fig. 2 ist ein anderes Ausführungsbeispiel des erfindungsgemäßen Schweißbrenners 1 gezeigt. Bei dem dargestellten Ausführungsbeispiel ist nunmehr nur der Endbereich 20 des Schweißbrenners 1 gezeigt. Hierbei ist nunmehr der Schweißbrenner 1 gekröpft bzw. gekrümmt ausgebildet, d.h., daß im Endbereich 20 des Schweißbrenners 1 das Mittelstück 4 des Grundkörpers 2 einen Radius 43 aufweist.

Der Schweißbrenner 1 ist wiederum wie in Fig. 1 aufgebaut, wobei jedoch nunmehr zwischen dem Grundkörper 2 und der Zuführungsvorrichtung 10, insbesondere dem Kupferrohr 11, keine Isolationsschicht 9 angeordnet ist. Grundsätzlich kann gesagt werden, daß der Schweißbrenner 1 aus den selben Teilen gebildet wird, wobei jedoch die Form der einzelnen Teile unterschiedlich ausgebildet sein kann, d.h., daß der Schweißbrenner 1 wiederum aus der Zuführungsvorrichtung 10, bestehend aus dem Kupferrohr 11 und dem Übergangselement 12 sowie dem Verbindungsstück 21 und dem mit dem Verbindungsstück 21 verbundenen Kontaktrohr 23, gebildet wird. Die Gaszuführung des Schweißbrenners 1 erfolgt bei dem dargestellten Ausführungsbeispiel wiederum über die Zuführungsvorrichtung 10, sodaß im Übergangselement 12 die radial angeordneten Bohrungen 25 sowie im Verbindungsstück 21 die Bohrungen 27 radial zur Längsmittelachse 14 des Schweißbrenners 1 angeordnet sind, wodurch das Schutzgas 8 über die Bohrungen 25, 26 und die Bohrung 31 der Isolierkappe 30 austreten kann. Anschließend wird das Schutzgas 8 wiederum über die Gasdüse 28 in den Schweißbereich, also um das Kontaktrohr 23. gesammelt und bildet somit im Schweißbereich eine Schutzgasatmosphäre.

Der Unterschied zu der in Fig. 1 dargestellten Ausführungsform liegt nun darin, daß nicht, wie in Fig. 1 gezeigt, die Führungsvorrichtung 32 in die Führungsbohrung 37 der Kontaktbuchse 23 eingeführt ist, sondern daß zwischen der Führungsvorrichtung 32 und der Kontaktbuchse 23 ein Übergangsstück 44 angeordnet ist. Das Übergangsstück 44 kann einteilig ausgeführt sein, wobei in dem dargestellten Ausführungsbeispiel das Übergangsstück 44 zweiteilig ausgeführt ist. Hierbei weist das Übergangsstück 44 einen Halteteil 45 und einen Führungsteil 46 auf.

Das Übergangsstück 44 wird derartig ausgebildet, daß die Führungsvorrichtung 32 in den Halteteil 45 hineinragt, wobei der Führungsteil 46 nunmehr in die Führungsbohrung 37 der Kontaktbuchse 23 positioniert wird. Das Übergangsstück 44, insbesondere der Halteteil 45, ragt zumindest über einen Teil in die Zuführungsvorrichtung 10 des Schweißbrenners, wodurch ein fester Sitz des Halteteils 45 an der Zuführungsvorrichtung 10 geschaffen wird. Hierzu ist das Übergangsstück 44, insbesondere der Halteteil 45 und der Führungsteil 46 derartig ausgebildet, daß diese unterschiedliche Bohrungen aufweisen, die einerseits für die Führungsvorrichtung 32 und andererseits für den Schweißdraht 7 ausgebildet sind. Das Übergangsstück 44 wird anschließend in Fig. 3 näher erläutert.

Die Funktion des Übergangsstückes 44 liegt nun darin, daß wiederum eine exakte Position des Schweißdrahtes 7 zur Kontaktbuchse 23, insbesondere zur Bohrung 36 der Kontaktbuchse 23 erzielt wird. Der Vorteil durch die Anordnung des Übergangsstükkes 44 liegt nun darin, daß der Schweißdraht 7, der über die Führungsvorrichtung 32 in den Führungsteil 46 des Übergangsstückes 44 eingeführt wird, über diesen Führungsteil 46 entsprechend ausgerichtet wird, d.h., daß der Schweißdraht 7, der aufgrund des Radius 43 des Schweißbrenners 1 und der flexibel verlaufenden Führungsvorrichtung 32 eine entsprechende Dressur aufweist, sodaß anschließend über den Führungsteil 46 der Schweißdraht 7 gerade gerichtet bzw. ausgerichtet wird und somit ein Eindringen in die Bohrung 36 des Kontaktrohres 23 mit einer relativ geringen Dressur möglich ist.

Hierzu ist es wiederum möglich, daß im Übergangsbereich 42 zwischen dem Halteteil 45 und dem Führungsteil 46 der Führungsteil 46 eine konische Verjüngung 42 aufweisen kann, d.h., daß der Führungsdraht 46 eine konisch verlaufende Verjüngung 42 aufweist, sodaß beim Austritt des Schweißdrahtes 7 aus der Führungsvorrichtung 32 und beim Eintritt in die Bohrung des Führungsteils 46 der Schweißdraht durch die konisch verlaufende Verjüngung 42 in Richtung der Bohrung des Führungsteils 46 abgelenkt wird, sodaß ein Eintritt in den Führungsteil 46 problemlos möglich ist.

Durch die zweiteilige Ausführung des Übergangsstückes 44 ist es nunmehr möglich, daß beispielsweise der Halteteil 45 aus Kupfer gebildet sein kann, wogegen der Führungsteil 46 aus verschleißfesten Materialien gebildet wird. Der Führungsteil 46 kann beispielsweise aus einem elektrisch nicht leitenden und hoch abriebfesten Material gebildet werden, sodaß durch das Ausrichten des Schweißdrahtes 7 über den Führungsteil 46 kein Verschleiß am Führungsteil 46 entsteht und der Schweißdraht 7 nicht beschädigt wird. Ein weiterer Vorteil bei der Ausbildung des Führungsteils 46 aus einem nicht leitenden Material liegt darin, daß der Schweißdraht 7 erst im Kontaktrohr 23 mit Strom bzw. mit Energie beaufschlagt wird, sodaß ein Kurzschluß im Bereich des Führungsteils 46 oder im Schweißbrenner 1 vermieden wird.

In Fig. 3 ist das Übergangsstück 44 in Seitenansicht geschnitten dargestellt. Das Übergangsstück 44 wird wiederum durch den Halteteil 45 und den Führungsteil 46 gebildet.

Wie nun aus Fig. 3 ersichtlich ist, weist das Übergangsstück 44 eine Führungsbohrung 47 mit einem Durchmesser 48 auf. Weiters ist der Halteteil 45 über einen Teilbereich der Führungsbohrung 47 bzw. über die gesamte Führungsbohrung 47 mit einer Gewindeanordnung 49, insbesondere einem Innengewinde, versehen.

Der Führungsteil 46 ist als rohrförmiger Gegenstand ausgebildet und weist über einen Teilbereich seiner Länge 50 ebenfalls ein Gewinde auf, sodaß der Führungsteil 46 in die Führungsbohrung 47 des Halteteils 45 eingeschraubt werden kann. Der Führungsteil 46 weist wiederum in Längsrichtung des Übergangsstückes 44 eine Bohrung 51 mit einem Durchmesser 52 auf, wobei jedoch der Durchmesser 48 der Führungsbohrung 47 für die Führungsvorrichtung 32 größer ist als der Durchmesser 52 der Bohrung 51 des Übergangsstückes 44 für den Schweißdraht 7. Durch die Anordnung der Gewindeanordnung 49 ist es nunmehr möglich, daß das Übergangsstück 44 aus unterschiedlichen Materialien gebildet sein kann. Hierzu wird bevorzugt der Halteteil 45 aus Kupfer und der Führungsteil 46 aus einem hoch reibfesten, bevorzugt nicht leitenden Material gebildet.

Zusätzlich weist das Übergangsstück 44 im Übergangsbereich zwischen dem Halteteil 45 und dem Führungsteil 46 eine Erhöhung 53, insbesondere eine Stützfläche 54, auf. Durch die Stützfläche 54 wird erreicht, daß beim Positionieren des Übergangsstückes 44 am Übergangselement 12 dieses über den Halteteil 45, insbesondere über die Außenfläche des Halteteils 45, in die Bohrung 13 des Übergangselementes 12 eindringen kann, wobei durch die Stützfläche 54 eine Abstützung des Übergangsstückes 44 erfolgt. Gleichzeitig wird durch die Stützfläche 54 erreicht, daß bei einer Vorschubbewegung des Schweißdrahtes 7 in Richtung des Kontaktrohres 23 sich die Stützfläche 54 an dem Kontaktrohr 23 abstützt, sodaß ein zu weites Eindringen des Führungsteils 46 in die Führungsbohrung 37 der Kontaktbuchse 23 vermieden wird.

Das Übergangsstück 44, insbesondere der Durchmesser 48 der Führungsbohrung 47 des Halteteils 45, ist derartig dimensioniert, daß die Führungsvorrichtung 32 in die Führungsbohrung 47 des Halteteils 45 eindringen kann, sodaß ein fester Sitz des Halteteils 45 bzw. des Übergangsstückes 44 an der Führungsvorrichtung 32 erreicht wird. Der Durchmesser 52 der Bohrung 51 des Führungsteils 46 ist derartig ausgelegt, daß dieser geringfügig größer als der Außendurchmesser 35 des Schweißdrahtes 7 ist, sodaß beim Eindringen des Schweißdrahtes 7 in die Bohrung 51 des Übergangsstückes 44 eine entsprechende Ausrichtung des Schweißdrahtes 7 erfolgt.

Aufgrund der Dimensionierung der Länge 50 des Führungsteils 46 kann nunmehr die Dressur des Schweißdrahtes 7 beeinflußt werden, d.h., daß aufgrund der Länge 50 des Führungsteils 46 der Schweißdraht 7 unterschiedlich ausgerichtet wird, sodaß bei einer längeren Länge 50 der Schweißdraht 7 eine geringere Dressur aufweist, als bei einer kürzeren Länge 50 des Führungsteils 46.

Selbstverständlich ist es möglich, daß das Übergangsstück 44 jede beliebige weitere Form aufweisen kann. Hierzu ist es beispielsweise möglich, daß das Übergangsstück 44, insbesondere der Halteteil 45, zwei unterschiedliche Führungsbohrungen 47 aufweist, wobei eine Führungsbohrung 47, insbesondere jene Führungsbohrung 47, in der die Führungsvorrichtung 32 eingeführt wird, einen Durchmesser 48, der dem Außendurchmesser 33 der Führungsvorrichtung 32 entspricht, aufweist. Die weitere Führungsbohrung 47 kann beispielsweise einen größeren Durchmesser 48 aufweisen, sodaß der Führungsteil 46 stärker dimensioniert werden kann. Hierzu muß jedoch die Führungsbohrung 37 an der Kontaktbuchse 23 auf den entsprechenden Durchmesser des Führungsteils 46 angepaßt werden.

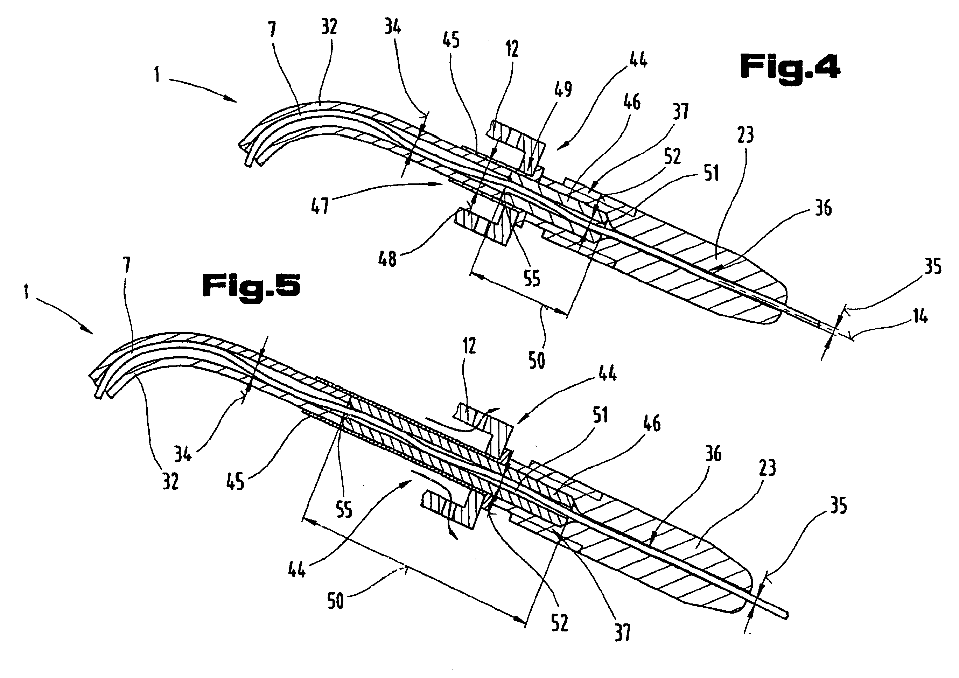

In den Fig. 4 und 5 ist ein weiteres Ausführungsbeispiel des Schweißbrenners 1 mit dem Übergangsstück 44 gezeigt. Bei dem dargestellten Ausführungsbeispiel ist nunmehr nur das Kontaktrohr 23 in Verbindung mit dem Übergangsstück 44 sowie die Verbindung des Übergangsstückes 44 mit dem Übergangselement 12 dargestellt.

Wie nun besser in Fig. 4 ersichtlich ist, ist die Führungsvorrichtung 32 in die Führungsbohrung 47 des Halteteils 45 eingeführt. Hierzu ist es beispielsweise möglich, daß in der Führungsbohrung 47 ein Innengewinde angeordnet ist, über das die Führungsvorrichtung 32 mit einem an ihrem Außenumfang angeordneten Gewinde eingeschraubt sein kann. Durch das Verbinden der Führungsvorrichtung 32 mit dem Übergangsstück 44 in Form einer Gewindeanordnung wird erreicht, daß ein fester Sitz der Führungsvorrichtung 32 am Halteteil 45 gegeben ist, sodaß aufgrund einer Schubbewegung des Schweißdrahtes 7 bzw. einer Zugbewegung vom Schweißdraht 7 ein selbständiges Lösen der Verbindung zwischen der Führungsvorrichtung 32 und dem Übergangsstück 44 verhindert wird.

Der Führungsteil 46 ist wiederum über die Gewindeanordnung 49 in die Führungsbohrung 47 des Halteteils 45 eingeschraubt, wodurch eine Querschnitts verminderung der Führung für den Schweißdraht 7 vorgenommen wird, d.h., daß ein Übergang der Führung des Schweißdrahtes 7 zwischen dem Innendurchmesser 34 der Führungsvorrichtung 32 auf einem Durchmesser 52 der Bohrung 51 des Führungsteils 46 erzielt wird. Durch diese Querschnittsverminderung wird nun erreicht, daß die durch die Führung des Schweißdrahtes 7 entstehende Dressur über die Länge 50 des Führungsteils 46 ausgerichtet wird, d.h., daß eine Ausrichtung des Schweißdrahtes 7 über die Länge 50 erzielt wird, wodurch eine exakte Einführung des Schweißdrahtes 7 in die Bohrung 36 der Kontaktrohres 23 geschaffen wird.

Damit ein fließender Übergang vom Innendurchmesser 34 der Führungsvorrichtung 32 auf den Durchmesser 52 der Bohrung 51 des Führungsteils 46 erreicht wird, ist im Endbereich, also im Kontaktbereich zwischen dem Führungsteil 46 und der Führungsvorrichtung 32, der Führungsteil 46 mit einer konisch zur Längsmittelachse 14 des Schweißbrenners 1 verlaufenden Verjüngung 55 angeordnet. Hierdurch wird erreicht, daß beim Austritt des Schweißdrahtes 7 aus der Führungsvorrichtung 32 ein kantenloser Übergang zum Führungsteil 46 erzielt wird, sodaß der Schweißdraht 7 beim Auftreffen auf die Verjüngung 55 automatisch bzw. selbständig in die Bohrung 51 des Führungsteils 46 abgelenkt wird, worauf der Schweißdraht 7 anschließend über die Länge 50 des Führungsteils 46 gerade gerichtet bzw. ausgerichtet wird.

Durch die Dimensionierung des Durchmessers 52 der Bohrung 51 des Führungsteils 46 kann nunmehr auf die Dressur, insbesondere auf die Ausrichtung des Schweißdrahtes 7, Einfluß genommen werden, d.h., daß aufgrund der Größe des Durchmessers 52 gegenüber dem Außendurchmesser 35 des Schweißdrahtes 7 die Dressur des Schweißdrahtes 7 vorgegeben werden kann, sodaß anschließend im Kontaktrohr 23 eine sichere Kontaktierung des Schweißdrahtes 7 mit der Oberfläche der Bohrung 36 des Kontaktrohres 23 erzielt wird und somit ein sicherer Stromübergang im Bereich des Kontaktrohres 23 geschaffen wird.

In Fig. 5 ist ein weiteres Anwendungsgebiet bzw. eine weitere Ausführungsform des Übergangsstückes 44 gezeigt. Hierbei ist wiederum die Führungsvorrichtung 32 in den Halteteil 45 eingeführt, wobei nunmehr der Halteteil 45 nicht, wie in Fig. 4 dargestellt, eingeschraubt ist, sondern mit der Führungsvorrichtung 32 verpreßt wird, sodaß wiederum ein sicherer und fester Sitz zwischen der Führungsvorrichtung 32 und dem Halteteil 45 erzielt wird. Bei dem dargestellten Ausführungsbeispiel in Fig. 5 wird nunmehr zur Ausrichtung der Dressur des Schweißdrahtes 7 der Führungsteil 46 mit einer entsprechenden Länge 50 ausgeführt, sodaß aufgrund dieser Länge 50 auf die Dressur des Schweißdrahtes 7 Einfluß genommen werden kann.

Hierbei ist für die Ausrichtung des Schweißdrahtes 7 im Führungsteil 46 nicht, wie in Fig. 4 beschrieben, der Durchmesser 52 der Bohrung 51 des Führungsteils 46 maßgebend, sondern wird die Ausrichtung des Schweißdrahtes 7 über die Länge 50 des Führungsteils 46 beeinflußt, d.h., daß aufgrund einer längeren, exakteren Führung des Schweißdrahtes 7 im Führungsteil 46 der Schweißdraht 7, insbesondere die Dressur des Schweißdrahtes 7, ausgerichtet wird, sodaß beim Austritt aus dem Führungsteil 46 der Schweißdraht 7 wiederum annähernd einen geradlinigen Verlauf aufweist und somit eine exakte Einführung in die Bohrung 36 des Kontaktrohres 23 ermöglicht wird.

Bei dem dargestellten Ausführungsbeispiel wird jedoch wiederum eine Verkleinerung des Querschnittes für den Verlauf des Schweißdrahtes 7 vorgenommen, d.h., daß wiederum der Innendurchmesser 34 der Führungsvorrichtung 32 auf einen Durchmesser 52 der Bohrung 51 reduziert wird, wobei jedoch nunmehr die Bohrung 51 mit ihrem Durchmesser 52 nicht exakt auf den Außendurchmesser 35 des Schweißdrahtes 7 angepaßt sein muß, da die Beeinflussung der Dressur bzw. das Geraderichten des Schweißdrahtes 7 über die entsprechende Länge 50 des Führungsteils 46 vorgenommen wird, sodaß beispielsweise ein Übergangsstück 44 für unterschiedliche Schweißdrähte 7 mit unterschiedlichem Außendurchmesser 35 eingesetzt werden kann.

Die Ausführungsbeispiele der zuvor beschriebenen Fig. 4 und 5 werden für Aluminium-Schweißdrähte 7, die eine relativ hohe Dressur aufweisen werden eingesetzt. Bei derartigen Schweißdrähten 7 wird nämlich bei der Zuführung von der Schweißdrahtrolle zum Schweißbrenner 1 über das Schlauchpaket und anschließend über die Führungsvorrichtung 32 zum Kontaktrohr 23 eine entsprechende Dressur in den Schweißdraht 7 eingebracht, da aufgrund der flexiblen Ausbildungen des Schlauchpaketes und der Führungsvorrichtung 32 sowie der gekrümmten Ausbildung des Schweißbrenners 1 sich der Schweißdraht 7 an den Verlauf des Schlauchpaketes anpaßt.

Durch die Anordnung des Übergangsstückes 44 hat sich in vorteilhafter Weise ergeben, daß durch die Anordnung des Übergangsstückes 44 eine Ausrichtung des Schweißdrahtes 7 vor der Einführung in die Kontaktbuchse 23 erreicht wird und somit wiederum eine exakte Positionierung und Zuführung des Schweißdrahtes 7 gegeben ist. Ein weiterer Vorteil liegt darin, daß durch die Ausbildung der Führungsvorrichtung 32 als nicht leitendes Material sowie durch die zweiteilige Ausbildung des Übergangsstückes 44, bei dem der Führungsteil 46 auch aus einem nicht leitenden Material besteht, eine stromlose Schweißdrahtzuführung geschaffen werden kann, sodaß erst beim Eintritt in das Kontaktrohr 23 bzw. beim Austritt aus dem Kontaktrohr 23 ein Stromübergang zu dem Schweißdraht 7 geschaffen wird, wodurch Verlustleistungen durch die Stromführung über den Schweißdraht 7 verhindert werden. Ein weiterer Vorteil durch die stromlose Führung des Schweißdrahtes 7 bis zum Kontaktrohr 23 liegt darin, daß Funkenbildungen im Inneren des Schweißbrenners 1 bzw. im Schlauchpaket verhindert werden können, sodaß ein Aufschmelzen des Schweißdrahtes 7 im Inneren des Schweißbrenners 1 vermieden wird und somit über eine längere Zeitdauer ein Schweißvorgang mit einem derartigen Schweißbrenner 1 durchgeführt werden kann.

Selbstverständlich ist es möglich, daß bei einer derartigen Ausbildung des Schweißbrenners 1 diese auch für Handschweißbrenner verwendet werden kann, d.h., daß das Übergangsstück 44 bzw. die Einführung der Führungsvorrichtung 32 in das Kontaktrohr 23 ebenfalls bei einem Handschweißbrenner eingesetzt werden kann.

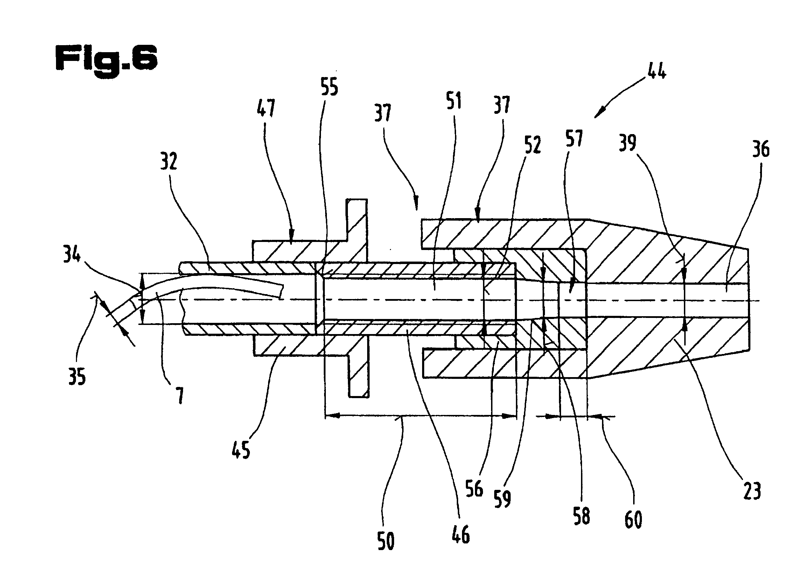

In Fig. 6 ist ein anderes Ausführungsbeispiel des Übergangsstückes 44 in Seitenansicht geschnitten gezeigt. Hierbei sind, wie in den zuvor beschriebenen Fig. 4 und 5, nur die wichtigsten Teile für die Verbindung des Übergangsstückes 44 mit dem Kontaktrohr 23 bzw. der Führungsvorrichtung 32 dargestellt.

Bei dem dargestellten Ausführungsbeispiel ist nunmehr das Übergangsstück 44 nicht mehr nur zweiteilig ausgebildet, sondern besteht aus mehreren Teilen, insbesondere aus drei Teilen, wobei wiederum für die Verbindung der Führungsvorrichtung 32 der Halteteil 45 angeordnet ist. Im Halteteil 45 ist wiederum der Führungsteil 46 eingesetzt bzw. eingeschraubt, wobei eine Querschnittsverminderung von der Führungsvorrichtung 32 zum Führungsteil 46 erfolgt, d.h., daß eine Querschnittsverminderung vom Innendurchmesser 34 der Führungsvorrichtung 32 auf einen Durchmesser 52 der Bohrung 51 des Führungsteils 46 vorgenommen wird.

Anschließend an den Führungsteil 46 ist beispielsweise über ein Außengewinde ein weiterer Führungsteil 56 angeordnet. Der Führungsteil 56 weist wiederum eine in Längsrichtung des Schweißbrenners 1 bzw. zur Bohrung 51 des Führungsteils 46 verlaufende Bohrung 57 mit einem Durchmesser 58 auf. Hierbei ist nunmehr der Durchmesser 58 der Bohrung 57 kleiner als der Durchmesser 52 der Bohrung 51, sodaß eine abermalige Querschnittsverminderung der Führung für den Schweißdraht 7 erzielt wird.

Damit wiederum ein reibungsloser bzw. kantenloser Übergang von der Bohrung 51 zur Bohrung 57 erfolgen kann, ist im Übergangsbereich vom Führungsteil 46 zum Führungsteil 56 eine konisch verlaufende Verjüngung 59 vorgesehen. Anschließend an den Führungsteil 56 ist wiederum das Kontaktrohr 23 angeordnet, d.h., daß nunmehr der Führungsteil 56 in die Führungsbohrung 37 des Kontaktrohres 23 eingesteckt bzw. eingeführt wird, sodaß eine exakte Führung vom Austritt der Bohrung 57 des Führungsteils 56 zum Kontaktrohr 23 gegeben ist.

Bei dem dargestellten Ausführungsbeispiel wird nunmehr eine stufenweise Anpassung des Querschnittes für die Führung des Schweißdrahtes 7 an die Bohrung 36 der Kontaktbuchse 23 vorgenommen, d.h., daß wiederum aufgrund der stufenweisen Querschnittsverminderung eine Ausrichtung des Schweißdrahtes 7 über das Übergangsstück 44 erzielt wird.

Ein weiterer Vorteil bei einer stufenweisen Anpassung des Querschnittes an die Bohrung 36 liegt darin, daß bei Verwendung von verschiedenen Schweißdrähten 7 mit unterschiedlichen Außendurchmessern 35 nicht das gesamte Übergangsstück 44 bei Verwendung eines anderen Schweißdrahtes 7 mit einem anderen Außendurchmesser 35 ausgetauscht werden muß, sondern daß durch einfaches Austauschen des Führungsteils 56 eine Anpassung an die unterschiedlichen Außendurchmesser 35 des Schweißdrahtes 7 vorgenommen werden kann.

Durch die Vorausrichtung des Schweißdrahtes 7 über den Führungsteil 46 ist es nunmehr möglich, daß zum exakten Ausrichten des Schweißdrahtes 7 der Führungsteil 56, insbesondere die Bohrung 57, eine Länge 60, die wesentlich kürzer als die Länge 50 des Führungsteils 46 ist, aufweisen kann. Dies ist insofern möglich, da der Schweißdraht 7 über die Länge 50 des Führungsteils 46 bereits vorausgerichtet ist, sodaß zur exakten Positionierung nur eine geringe Länge 60 benötigt wird.

Es ist auch möglich, daß, wie in den zuvor beschriebenen Figuren, das Übergangsstück 44 nicht aus mehreren Einzelteilen gebildet wird, sondern daß das Übergangsstück 44 aus einem einzigen Teil gebildet ist.

Selbstverständlich ist es möglich, daß anstelle des Übergangsstückes 44 die Führungsvorrichtung 32 im Endbereich, also im Übergangsbereich zum Kontaktrohr 23, eine Querschnittsverminderung des Innendurchmessers 34 der Führungsvorrichtung 32 aufweisen kann, sodaß aufgrund dieser Verjüngung wiederum eine Ausrichtung des Schweißdrahtes 7 erfolgt. Hierzu ist es beispielsweise möglich, daß bei der Verjüngung der Führungsvorrichtung 32 dieses Stück, also das Verjüngungsstück, in das Kontaktrohr 23 eingeschoben wird, wobei hierzu die Führungsbohrung 37 auf den Durchmesser der Führungsvorrichtung 32 abgestimmt ist.

Es ist auch möglich, daß bei einer Ausbildung der Führungsvorrichtung 32 aus Kunststoff im Übergangsbereich zum Kontaktrohr 23 eine Metallhülse angeordnet sein kann, sodaß in jenem Bereich, wo die Metallhülse auf die Führungsvorrichtung 32 aufgeschoben ist, ein gerader Verlauf der Führungsvorrichtung 32 erreicht wird, sodaß eine Ausrichtung des Schweißdrahtes 7 in diesem Bereich erreicht wird.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Vor allem können die einzelnen, in den Fig. 1; 2; 3; 4, 5; 6 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Schweißbrenner
- 2: Grundkörper
- 3: Anschlußstück
- 4: Mittelstück
- 5: Endstück

- 6: Schweißraupe
- 7: Schweißdraht
- 8: Schutzgas
- 9: Isolationsschicht
- 10: Zuführungsvorrichtung

- 11: Kupferrohr
- 12: Übergangselement
- 13: Bohrung
- 14: Längsmittelachse
- 15: Hohlraum

- 16: Innendurchmesser
- 17: Schweißraupe
- 18: Kühlvorrichtung
- 19: Versorgungsrohr
- 20: Endbereich

- 21: Verbindungsstück
- 22: Gewindeanordnung
- 23: Kontaktrohr
- 24: Gewindeanordnung
- 25: Bohrung

- 26: Hohlraum
- 27: Bohrung
- 28: Gasdüse
- 29: Innenraum
- 30: Isolierkappe

- 31: Bohrung
- 32: Führungsvorrichtung
- 33: Außendurchmesser
- 34: Innendurchmesser
- 35: Außendurchmesser

- 36: Bohrung
- 37: Führungsbohrung
- 38: Länge
- 39: Durchmesser
- 40: Durchmesser

- 41: Übergangsbereich
- 42: Verjüngung
- 43: Radius
- 44: Übergangsstück
- 45: Halteteil

- 46: Führungsteil
- 47: Führungsbohrung
- 48: Durchmesser
- 49: Gewindeanordnung
- 50: Länge

- 51: Bohrung
- 52: Durchmesser
- 53: Erhöhung
- 54: Stützfläche
- 55: Verjüngung

- 56: Führungsteil
- 57: Bohrung
- 58: Durchmesser
- 59: Verjüngung
- 60: Länge

## Patentansprüche

1. Schweißbrenner, bestehend aus einem aus zumindest einem Teil gebildeten Grundkörper, in dem eine Zuführungsvorrichtung, mit einem Aluminiumschweißdraht angeordnet ist, die mit einem Verbindungsstück zur Aufnahme eines Kontaktrohres verbunden ist, wobei im Kontaktrohr eine Bohrung für den Aluminiumschweißdraht angeordnet ist und in der Zuführungsvorrichtung eine Führungsvorrichtung für den Aluminiumschweißdraht angeordnet ist, die sich vom Verbindungsstück in die vom Kontaktrohr abgewendete Richtung erstreckt, **dadurch gekennzeichnet, dass** in dem Kontaktrohr (23) eine zur Bohrung (36) konzentrische Führungsbohrung (37) mit größerem Durchmesser (40) für die Führungsvorrichtung (32) angeordnet ist, wobei sich die Führungsvorrichtung (32) in die Führungsbohrung (37) des Kontaktrohres (23) hineinerstreckt, so dass eine Ausrichtung des Aluminiumschweißdrahtes (7) geschaffen wird.

2. Schweißbrenner, bestehend aus einem aus zumindest einem Teil gebildeten Grundkörper, in dem eine Zuführungsvorrichtung, mit einem Aluminiumschweißdraht angeordnet ist, die mit einem Verbindungsstück zur Aufnahme eines Kontaktrohres verbunden ist, wobei im Kontaktrohr eine Bohrung für den Aluminiumschweißdraht angeordnet ist und in der Zuführungsvorrichtung eine Führungsvorrichtung für den Aluminiumschweißdraht angeordnet ist, die sich vom Verbindungsstück in die vom Kontaktrohr abgewendete Richtung erstreckt, **dadurch gekennzeichnet, dass** in dem Kontaktrohr (23) eine zur Bohrung (36) konzentrische Führungsbohrung (37) mit größerem Durchmesser (40) für die Führungsvorrichtung angeordnet ist, dass die Führungsvorrichtung (32) im Bereich des Verbindungsstückes (21) mit einem Übergangsstück (44) verbunden ist, so dass eine Ausrichtung des Aluminiumschweißdrahtes (7) geschaffen wird und dass das Übergangsstück (44) in die Führungsbohrung (37) des Kontaktrohres (23) hineinragt.

3. Schweißbrenner nach Anspruch 2, **dadurch gekennzeichnet, dass** das Übergangsstück (44) eine Bohrung (51) für einen Schweißdraht (7) und eine Führungsbohrung (47) für die Führungsvorrichtung (32) aufweist.

4. Schweißbrenner nach einem oder mehreren der vorhergehenden Ansprüche, **dadurch gekennzeichnet, dass** ein Durchmesser (48) der Führungsbohrung (47) für die Führungsvorrichtung (32) größer ist als ein Durchmesser (52) der Bohrung (51) für einen Schweißdraht (7).

5. Schweißbrenner nach einem oder mehreren der vorhergehenden Ansprüche, **dadurch gekennzeichnet, dass** ein Übergangsbereich (41) zwischen der Führungsbohrung (37) und der Bohrung (36) des Kontaktrohres (23) durch eine konische Verjüngung (42) gebildet ist.

6. Schweißbrenner nach einem der Ansprüche 2 bis 3 **dadurch gekennzeichnet, dass** das Übergangsstück (44) aus mehreren Teilen, insbesondere aus einem Halteteil (45) und einem Führungsteil (46, 56), gebildet ist.

7. Schweißbrenner nach einem der Ansprüche 2, 3 oder 6 **dadurch gekennzeichnet, dass** im Übergangsstück (44) der Übergangsbereich (41) zwischen der Führungsbohrung (47) und der Bohrung (51) durch die konische Verjüngung (42) ausgebildet ist.

8. Schweißbrenner nach Anspruch 6, **dadurch gekennzeichnet, dass** der Halteteil (45) und der Führungsteil (46, 56) aus unterschiedlichen Materialien gebildet sind.

9. Schweißbrenner nach Anspruch 8, **dadurch gekennzeichnet, dass** das Übergangsstück (44) am einem Halteteil (45) und einem Führungsteil (46, 56) gebildet ist und dass der Führungsteil (46, 56) in eine Führungsbohrung (37) oder in die Führungsbohrung (37) für die Führungsvorrichtung (32) des Kontaktrohres (23) hineinragt.

10. Schweißbrenner nach einem der Ansprüche 8 bis 9, **dadurch gekennzeichnet, dass** der Durchmesser (40) der Führungsbohrung (37) geringfügig größer ist als ein Außendurchmesser des Führungsteils (46, 56) oder ein Außendurchmesser (33) der Führungsvorrichtung (32).

11. Schweißbrenner nach einem der Ansprüche 8 bis 10, **dadurch gekennzeichnet, dass** ein Durchmesser (52, 58) des Führungsteils (46, 56) geringfügig größer ist als ein Außendurchmesser (35) eines Schweißdrahtes (7).

12. Schweißbrenner nach einem der Ansprüche 8 bis 11, **dadurch gekennzeichnet, dass** der Führungsteil (46, 56) beispielsweise über ein Gewinde, insbesondere eine Gewindeanordnung (49), mit dem Halteteil (45) verbunden ist.

13. Schweißbrenner nach einem der Ansprüche 8 bis 12, **dadurch gekennzeichnet, dass** der Halteteil (45) im Übergangsbereich zu dem Führungsteil (46, 56) eine Stützfläche (54) aufweist.

14. Schweißbrenner nach einem der Ansprüche 8 bis 13, **dadurch gekennzeichnet, dass** zumindest ein Teil des Halteteils (45) in die Zuführungsvorrichtung (10) des Schweißbrenners (1) hineinragt.

15. Schweißbrenner nach einem der Ansprüche 8 bis 14, **dadurch gekennzeichnet, dass** der Halteteil (45) und die Führungsvorrichtung (32) über ein Gewinde miteinander verbunden sind.

16. Schweißbrenner nach einem der Ansprüche 2 -15, **dadurch gekennzeichnet, dass** die Führungsvorrichtung (32) aus einem elastischen Rohr oder einer Spiralfeder aus einem Kunststoff oder einem Material mit elastischen Eigenschaften gebildet ist.

17. Schweißbrenner nach einem oder mehreren der vorhergehenden Ansprüche, **dadurch gekennzeichnet, dass** die Führungsvorrichtung (32) aus einem elektrisch nicht leitenden Material gebildet ist.

18. Schweißbrenner nach einem oder mehreren der vorhergehenden Ansprüche, **dadurch gekennzeichnet, dass** die Führungsvorrichtung (32) einen Außendurchmesser (33) aufweist, der geringer als ein Innendurchmesser (16) der Zuführungsvorrichtung (10), insbesondere einem Kupferrohr (11), ist und ein Innendurchmesser (34) der Führungsvorrichtung (32) zumindest geringfügig größer ist als ein Außendurchmesser (35) eines Schweißdrahtes (7).

19. Schweißbrenner nach einem oder mehreren der vorhergehenden Ansprüche, **dadurch gekennzeichnet, dass** der Außendurchmesser (33) der Führungsvorrichtung (32) beispielsweise um 10 % bis 50 %, bevorzugt um 25 % kleiner ist als der Innendurchmesser (16) der Zuführungsvorrichtung (10).

20. Schweißbrenner nach einem oder mehreren der vorhergehenden Ansprüche, **dadurch gekennzeichnet, dass** ein Durchmesser (39) der Bohrung (36) im Kontaktrohr (23) geringfügig größer ist als ein Außendurchmesser (35) eines Schweißdrahtes (7).

21. Schweißbrenner nach einem oder mehreren der vorhergehenden Ansprüche, **dadurch gekennzeichnet, dass** der Schweißbrenner (1) im Endbereich gekrümmt ausgebildet ist.

22. Schweißbrenner nach einem oder mehreren der vorhergehenden Ansprüche, **dadurch gekennzeichnet, dass** der Schweißbrenner (1) eine Kühlvorrichtung (18), bestehend aus zumindest zwei Versorgungsleitungen (19), aufweist.

23. Schweißbrenner nach einem oder mehreren der vorhergehenden Ansprüche, **dadurch gekennzeichnet, dass** die Zufuhr eines Gases, insbesondere eines Schutzgases (8), über die Zuführungsvorrichtung (10) erfolgt, wobei im Übergangsbereich zwischen dem Verbindungsstück (21) und dem Endbereich der Zuführungsvorrichtung (10) die Zuführungsvorrichtung (10) und das Verbindungsstück (21) mit radial zueinander gerichteten Bohrungen (25, 27) versehen sind.

## Claims

1. Welding torch consisting of a base body made up of at least one part, in which a feed mechanism with an aluminium welding wire is disposed, which is joined to a connecting piece for receiving a contact tube, in which contact tube a bore is provided for the aluminium welding wire and a guide mechanism for an aluminium welding wire is disposed in the feed mechanism extending from the connecting piece in the direction remote from the contact tube, **characterised in that** a guide bore (37) concentric with the bore (36) and having a bigger diameter (40) is provided in the contact tube (23) for the guide mechanism (32) and the guide mechanism (32) extends through the guide bore (37) of the contact tube (23), thereby orienting the aluminium welding wire (7).

2. Welding torch consisting of a base body made up of at least one part, in which a feed mechanism for an aluminium welding wire is disposed, which is joined to a connecting piece for receiving a contact tube, in which contact tube a bore is provided for the aluminium welding wire and a guide mechanism for the aluminium welding wire is disposed in the feed mechanism extending from the connecting piece in the direction remote from the contact tube, **characterised in that** a guide bore (37) concentric with the bore (36) and with a bigger diameter (40) is provided in the contact tube (23) for the guide mechanism, thereby orienting the aluminium welding wire (7), and the guide mechanism (32) is connected to an adapter (44) in the region of the connecting piece (21) and the adapter (44) projects into the guide bore (37) of the contact tube (23).

3. Welding torch as claimed in claim 2, **characterised in that** the adapter (44) has a bore (51) for a welding wire (7) and a guide bore (47) for the guide mechanism (32).

4. Welding torch as claimed in one or more of the preceding claims, **characterised in that** a diameter (48) of the guide bore (47) for the guide mechanism (32) is bigger than a diameter (52) of the bore (51) for a welding wire (7).

5. Welding torch as claimed in one or more of the preceding claims, **characterised in that** a transition region (41) between the guide bore (37) and the bore (36) of the contact tube (23) has a conical taper (42).

6. Welding torch as claimed in one of claims 2 to 3, **characterised in that** the adaptor (44) is made up of several parts, in particular a retaining part (45) and a guide part (46, 56).

7. Welding torch as claimed in one of claims 2, 3 or 6, **characterised in that** the transition region (41) between the guide bore (47) and the bore (51) in the adaptor (44) has a conical taper (42).

8. Welding torch as claimed in claim 6, **characterised in that** the retaining part (45) and the guide part (46, 56) are made from different materials.

9. Welding torch as claimed in claim 8, **characterised in that** the adapter (44) consists of a retaining part (45) and a guide part (46, 56) and the guide part (46, 56) projects into a guide bore (37) or into the guide bore (37) for the guide mechanism (32) of the contact tube (23).

10. Welding torch as claimed in one of claims 8 to 9, **characterised in that** the diameter (40) of the guide bore (37) is slightly bigger than an external diameter of the guide part (46, 56) or an external diameter (33) of the guide mechanism (32).

11. Welding torch as claimed in one of claims 8 to 10, **characterised in that** a diameter (52, 58) of the guide part (46, 56) is slightly bigger than an external diameter (35) of a welding wire (7).

12. Welding torch as claimed in one of claims 8 to 11, **characterised in that** the guide part (46, 56) is connected to the retaining part (45) by means of a thread, for example, in particular a thread assembly (49).

13. Welding torch as claimed in one of claims 8 to 12, **characterised in that** the retaining part (45) has a support surface (54) in the transition region to the guide part (46, 56).

14. Welding torch as claimed in one of claims 8 to 13, **characterised in that** at least a part of the retaining part (45) projects into the feed mechanism (10) of the welding torch (1).

15. Welding torch as claimed in one of claims 8 to 14, **characterised in that** the retaining part (45) and the guide mechanism (32) are connected to one another by means of a thread.

16. Welding torch as claimed in one of claims 2 - 15, **characterised in that** the guide mechanism (32) comprises elastic tube or a helical spring made from a plastics or a material with elastic properties.

17. Welding torch as claimed in one or more of the preceding claims, **characterised in that** the guide mechanism (32) is made from an electrically non-conductive material.

18. Welding torch as claimed in one or more of the preceding claims, **characterised in that** the guide mechanism (32) has an external diameter (33) that is smaller than an internal diameter (16) of the feed mechanism (10), in particular a copper tube (11), and an internal diameter (34) of the guide mechanism (32) is at least slightly bigger than an external diameter (35) of a welding wire (7).

19. Welding torch as claimed in one or more of the preceding claims, **characterised in that** the external diameter (33) of the guide mechanism (32) is smaller than the internal diameter (16) of the feed mechanism (10) by 10 % to 50 %, for example, preferably by 25 %.

20. Welding torch as claimed in one or more of the preceding claims, **characterised in that** a diameter (3 9) of the bore (3 6) in the contact tube (23) is slightly bigger than an external diameter (35) of a welding wire (7).

21. Welding torch as claimed in one or more of the preceding claims, **characterised in that** the welding torch (1) is curved at the end region.

22. Welding torch as claimed in one or more of the preceding claims, **characterised in that** the welding torch (1) has a cooling system (18) consisting of at least two supply lines (19).

23. Welding torch as claimed in one or more of the preceding claims, **characterised in that** a gas, in particular a shielding gas (8) is delivered via the feed system (10) and the feed system (10) and the connecting piece (21) are provided with bores (25, 27) which are disposed radially relative to one another in the transition region between the connecting piece (21) and the end region of the feed system (10).

## Revendications

1. Chalumeau de soudage, constitué d'un corps de base formé par au moins une partie, dans lequel est disposé un dispositif d'amenée avec un fil d'apport en aluminium, qui est relié à une pièce de liaison pour la réception d'un tube de contact, où est disposé dans le tube de contact un perçage pour le fil d'apport en aluminium, et dans le dispositif d'amenée est disposé un dispositif de guidage pour le fil d'apport en aluminium, qui s'étend de la pièce de liaison dans la direction éloignée du tube de contact, **caractérisé en ce qu'**il est ménagé dans le tube de contact (23) un perçage de guidage (37), concentrique au perçage (36), d'un plus grand diamètre (40) pour le dispositif de guidage (32), où le dispositif de guidage (32) s'étend dans le perçage de guidage (37) du tube de contact (23), de sorte qu'un alignement du fil d'apport en aluminium (7) est créé.

2. Chalumeau de soudage, constitué d'un corps de base formé par au moins une partie, dans lequel est disposé un dispositif d'amenée avec un fil d'apport en aluminium, qui est relié à une pièce de liaison pour la réception d'un tube de contact, où est ménagé dans le tube de contact un perçage pour le fil d'apport en aluminium, et dans le dispositif d'amenée est disposé un dispositif de guidage pour le fil d'apport en aluminium, qui s'étend de la pièce de liaison dans la direction éloignée du tube de contact, **caractérisé en ce qu'**il est ménagé dans le tube de contact (23) un perçage de guidage (37) concentrique au perçage (36) d'un plus grand diamètre (40) pour le dispositif de guidage, **en ce que** le dispositif de guidage (32), au voisinage de la pièce de liaison (21), est relié à une pièce de transition (44), de sorte qu'un alignement du fil d'apport en aluminium (7) est créé, et **en ce que** la pièce de transition (44) fait saillie dans le perçage de guidage (37) du tube de contact (23).

3. Chalumeau de soudage selon la revendication 2, **caractérisé en ce que** la pièce de transition (44) présente un perçage (51) pour un fil d'apport (7) et un perçage de guidage (47) pour le dispositif de guidage (32).

4. Chalumeau de soudage selon l'une ou plusieurs des revendications précédentes, **caractérisé en ce qu'**un diamètre (48) du perçage de guidage (47) pour le dispositif de guidage (32) est plus grand qu'un diamètre (52) du perçage (51) pour un fil d'apport (7).

5. Chalumeau de soudage selon l'une ou plusieurs des revendications précédentes, **caractérisé en ce qu'**une zone de transition (41) entre le perçage de guidage (37) et le perçage (36) du tube de contact (23) est formée par un rétrécissement conique (42).

6. Chalumeau de soudage selon l'une des revendications 2 à 3, **caractérisé en ce que** la pièce de transition (44) est constituée de plusieurs parties, notamment d'une partie de retenue (45) et d'une partie de guidage (46, 56).

7. Chalumeau de soudage selon l'une des revendications 2, 3 ou 6, **caractérisé en ce que** dans la pièce de transition (44), la zone de transition (41) entre le perçage de guidage (47) et le perçage (51) est réalisée par le rétrécissement conique (42).

8. Chalumeau de soudage selon la revendication 6, **caractérisé en ce que** la partie de retenue (45) et la partie de guidage (46, 56) sont réalisées en des matériaux différents.

9. Chalumeau de soudage selon la revendication 8, **caractérisé en ce que** la pièce de transition (44) est formée par une partie de retenue (45) et une partie de guidage (46, 56), **en ce que** la partie de guidage (46, 56) fait saillie dans un perçage de guidage (37) ou dans le perçage de guidage (37) pour le dispositif de guidage (32) du tube de contact (23).

10. Chalumeau de soudage selon l'une des revendications 8 à 9, **caractérisé en ce que** le diamètre (40) du perçage de guidage (37) est légèrement plus grand qu'un diamètre extérieur de la partie de guidage (46, 56) ou un diamètre extérieur (33) du dispositif de guidage (32).

11. Chalumeau de soudage selon l'une des revendications 8 à 10, **caractérisé en ce qu'**un diamètre (52, 58) de la partie de guidage (46, 56) est légèrement plus grand qu'un diamètre extérieur (35) d'un fil d'apport (7).

12. Chalumeau de soudage selon l'une des revendications 8 à 11, **caractérisé en ce que** la partie de guidage (46, 56) est reliée par exemple par un filetage, notamment un agencement de filetage (49), à la partie de retenue (45).

13. Chalumeau de soudage selon l'une des revendications 8 à 12, **caractérisé en ce que** la partie de retenue (45) présente dans la zone de transition vers la partie de guidage (46, 56) une face d'appui (54).

14. Chalumeau de soudage selon l'une des revendications 8 à 13, **caractérisé en ce qu'**au moins une partie de la partie de retenue (45) fait saillie dans le dispositif d'amenée (10) du chalumeau de soudage (1).

15. Chalumeau de soudage selon l'une des revendications 8 à 14, **caractérisé en ce que** la partie de retenue (45) et le dispositif de guidage (32) sont reliés l'un à l'autre par un filetage.

16. Chalumeau de soudage selon l'une ou plusieurs des revendications précédentes, **caractérisé en ce que** le dispositif de guidage (32) est formé par un tube élastique ou un ressort spirale en un matériau synthétique ou un matériau présentant des caractéristiques élastiques.

17. Chalumeau de soudage selon l'une ou plusieurs des revendications précédentes, **caractérisé en ce que** le dispositif de guidage (32) est réalisé en un matériau électriquement non conducteur.

18. Chalumeau de soudage selon l'une ou plusieurs des revendications précédentes, **caractérisé en ce que** le dispositif de guidage (32) présente un diamètre extérieur (33) qui est plus petit qu'un diamètre intérieur (16) du dispositif d'amenée (10), notamment d'un tube en cuivre (11), et un diamètre intérieur (34) du dispositif de guidage (32) est au moins légèrement plus grand qu'un diamètre extérieur (35) d'un fil d'apport (7).

19. Chalumeau de soudage selon l'une ou plusieurs des revendications précédentes, **caractérisé en ce que** le diamètre extérieur (33) du dispositif de guidage (32) est par exemple de 10% à 50%, de préférence de 25% plus petit que le diamètre intérieur (16) du dispositif d'amenée (10).

20. Chalumeau de soudage selon l'une ou plusieurs des revendications précédentes, **caractérisé en ce qu'**un diamètre (39) du perçage (36) dans le tube de contact (23) est légèrement plus grand qu'un diamètre extérieur (35) d'un fil d'apport (7).

21. Chalumeau de soudage selon l'une ou plusieurs des revendications précédentes, **caractérisé en ce que** le chalumeau de soudage (1) est courbé dans la zone d'extrémité.

22. Chalumeau de soudage selon l'une ou plusieurs des revendications précédentes, **caractérisé en ce que** le chalumeau de soudage (1) présente un dispositif de refroidissement (18), constitué d'au moins deux conduits d'alimentation (19).

23. Chalumeau de soudage selon l'une ou plusieurs des revendications précédentes, **caractérisé en ce que** l'amenée d'un gaz, notamment d'un gaz protecteur (8), a lieu par le dispositif d'amenée (10), où dans la zone de transition entre la pièce de liaison (21) et la zone d'extrémité du dispositif d'amenée (10), le dispositif d'amenée (10) et la pièce de liaison (21) sont pourvus de perçages (25, 27) dirigés radialement l'un vers l'autre.
